# EUROPEAN PATENT APPLICATION

(11) **EP 2 327 941 A1**
(43) Date of publication of application: **01.06.2011**
(21) Application number: 09815701.9
(22) Date of filing: 22.09.2009
(51) Int. Cl.: F24J 2/52, F24J 2/54, H01L 31/042

(54) **MODULAR STRUCTURE FOR CARRYING SOLAR PANELS**

(30) Priority: 26.09.2008 ES 200801954 U; 09.06.2009 ES 200900975 U
(71) Applicant: Lahora Cruz, Jorge Agustin, 71 Barcelona (ES)
(72) Inventor: CRUZ DIAZ, Ma. Angeles, E-08030 Barcelona (ES); LAHORA CRUZ, Jorge Agustin, E71, Barcelona (ES)
(74) Representative: Pereira Toña, Maria Irache
(86) International application number: PCT/ES2009/000463
(87) International publication number: WO 2010/034856

(57) **Abstract**

A MODULAR SUPPORT STRUCTURE FOR SOLAR PANELS, formed by a set of parts made of thermoplastic material which are coupled together by pressure clipping, forming modular elements (3) comprised of triangular trusses (4) and horizontal cross pieces (5) consisting of hollow tubes (6), couplings (7), connecting rods (14) with a variable positioning angle, claws (22) for anchoring which are inserted into the cross pieces (5) and are used to fasten the panels, and interlocking tips (12) for each joint, comprised of a joining system between the modules to convert them into undividable units, a deflector system for reducing wind loads, a seasonal inclination system for allowing the inclination of the panels to be changed (2) with respect to the plane on which the structure (1) is installed, once mounted and with the panels (2) attached to it, and a regulating and levelling system for fastening the structure to irregular surfaces.

## Description

### OBJECT OF THE INVENTION

The invention, as described in the title of this descriptive brief, refers to a modular support structure for solar panels, which adds to the use for which it is intended a series of advantages and innovative characteristics that will be described later in this document. These constitute a considerable improvement to the aspects already known in this field.

More specifically, the object of the invention is based on a structure whose purpose is to act as a support for fastening thermal and photovoltaic solar panels to the ground, to a roof or in any other place. It has the peculiarity of being configured using a small number of parts, all of which are made of thermoplastic material which are coupled to form modular elements, allowing the panels to be quickly and easily fastened, without having to use any kind of tools to put them in place, since this is done by pressure clipping.

### FIELD OF APPLICATION OF THE INVENTION

This invention can be used in the solar panel support structure manufacturing industry.

### BACKGROUND TO THE INVENTION

At present, and in reference to the state of the art, it should be said there are many known types of structures that are used for the purpose mentioned herein (i.e., for fastening solar panels). These normally consist of tubular-like structures made of galvanised iron or aluminium, which are coupled to each other and to the panels by anchoring systems based on anchoring by welding and/or screwing.

However, the applicant is not aware of the existence of any other support structure for solar panels whose technical, structural or configuration characteristics are similar to those presented here, which has the exclusive objective of avoiding the use of fastening systems based on welding and/or screwing of conventional known systems.

### EXPLANATION OF THE INVENTION

The modular structure for solar panels proposed by the present invention is self-configurable, and this is an innovative feature in its field of application, since, based on its implementation, it can be confirmed without doubt that it satisfactorily fulfils the objectives indicated above. The details that make this possible and set it apart from other known systems are duly set out in the final claims attached to this invention.

Specifically, the foregoing modular structure, as already indicated, has the mission of serving as a support for fastening thermal or photovoltaic solar panels and is configured by a set of parts, all of which are made of thermoplastic material. These are coupled together to form modular elements that can be used to fasten the panels by pressure clipping.

It should be mentioned that the coupling of the parts forming each modular element is also done by pressure clipping, and that the number of those elements varies, depending on the number of panels to be fastened. This way, the only screw-type fastening used is for attaching the modular elements or the structure unit to the roof or to the site where it must be installed.

In turn, the thermoplastic parts used to form the different modular elements consist of:
- a series of straight tubes of different sizes, depending on the size of the panels and on the inclination that will be used to fasten the panels;
- a series of couplings that join the ends of the tubes to each other;
- a series of connecting rods with a variable positioning angle, which allow the joints between the tubes to be made with the angle opening required in each case;
- a series of anchoring claws for attaching the panels;
- and lastly, a series of interlocking parts or tips, which are used to secure the fastening and anchoring of each joint between the foregoing parts.

In this way, the structure described in the invention is, for instance, configured using a variety of triangles, shaped by the joints of the parts described above, i.e., each one is shaped based on joining the three tubes using the respective connecting rods and couplings. To make the structure easier to mount, these connecting rods and couplings can be pre-assembled in the factory and laid out vertically and parallel to each other, and are joined by transversal cross pieces that connect them horizontally at their vertexes, so that the structure takes the shape of a prism with a triangular base, preferably a rectangle, laid on its side.

The top, inclined face of this prism is the one to which the solar panels will be fastened, for which purpose the cross pieces mentioned above that join the triangles have anchoring claws so that the bottom side of the panels rests on those claws on the bottom cross piece, drop down and can be "clipped" by applying pressure to the top side of the claws of the top cross piece, leaving the panel perfectly secured by those claws at the bottom and at the top.

In addition, as a complement to increase the robustness and rigidity of the structure shape, the possibility exists of incorporating another tube that acts like a brace and joins the diametrically opposed vertexes of the back of the structure, in which case, the fastening method is performed with bolts.

Logically, the size of the structure, i.e., the number of modular elements that form it, will depend on the number of panels to be fastened. It can in all cases be enlarged, by incorporated new modular elements, that is, additional cross pieces and triangles.

It is important to stress that the connection parts with the variable positioning angle which are called connecting rods, due to their similarity with such elements, are useful in that they can change the angle of the structure and thus, the positioning of the panels, depending on the needs of each case, without having to change the type of part that is to be used, since it is well known that solar panels are usually installed at an angle of about 30° to obtain good radiation. However, when they are placed on a roof with two sloping sides, for example, which already has an inclination of 15°, the structure will only need to be given a further 15° of inclination for the panels to reach those 30° mentioned above.

What is more, the structure is suitable for installation directly on the roof, if need be, in which case, the bottom part is not coupled and only rectangular trusses are formed, to which the panels can be "clipped" directly.

Likewise, the special configuration of the structure means that it can adopt different configurations, and therefore be adapted to different needs. For this purpose, all that must be done is to change the position of the connecting rods, and the number and length of the tubes forming each modular element, with the possibility of creating new structures using cube-shaped modular elements or ones with different shapes, other than the triangular prism described above.

Apart from what has been described above, the structure has a system in which the modules can be joined to each other, which increases their resistance to wind loads and reducing the number of counter weights or even making them unnecessary, as otherwise they must be installed to counteract those wind loads; by means of a deflector system that has the same purpose as the above, and is complementary to it or used as an alternative to it, which allows the wind loads to be reduced and makes it unnecessary to install counter weights. This makes it easy to install solar panels on roofs or structures that support less weight; by means of a seasonal inclination system that allows the panels to be inclined, once installed and be placed in the right position to catch the sun in the summer and winter. This has a gearwheels system that allows the angle of the structure to be changed, which can be activated manually or automatically, as is the case; by means of an alternative system for fastening solar panels on the structure to the one described above. This system is constituted by staples that are coupled by clipping to an element with a lateral displacement, and in addition enables the panels to be mounted and dismantled and both panels of a normal thickness and thin glass panels to be installed, by joining the parts, which is beneficial in terms of the cost of manufacturing the structure. It also has a regulating and levelling system for fastening the structure to irregular surfaces, in other words, surfaces that are inclined or rough.

Also, additionally and as an option, the structure has a floating fastening system based on tensor cables which are anchored around the perimeter and/or at strategic points on the roof or façade on which it is installed, making it unnecessary to drill holes on the roof or façade that could spoil or damage that roof or façade both with respect to wind loads and with respect to the holes themselves, with the structure remaining fastened and suspended above them. This floating fastening system, which has a series of supporting parts located at points where the cables intersect and to which the structure is coupled, has a *silentblock* base to prevent friction due to the vibrations of the structure caused by the wind loads that generate noise.

On the other hand, it should be mentioned that the structure can be used for incorporating elements which, although having a similar configuration to that of the solar panels for it is intended, are of a different nature, for instance, advertising panels or other types of panel.

The above-mentioned modular structure for solar panels is therefore an innovative element, with structural and constitutive characteristics that are hitherto unknown for the purpose for which it is to be used. These reasons, together with its practical nature, are sufficient grounds for it to obtain the privilege of exclusivity which is being sought.

### DESCRIPTION OF THE DRAWINGS

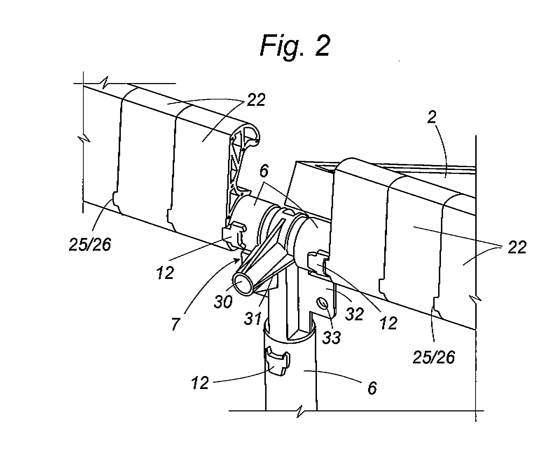

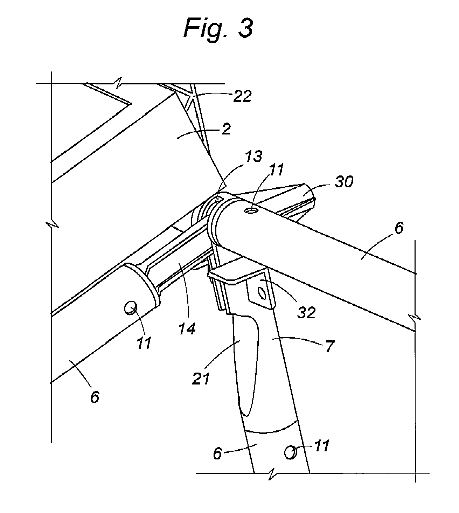

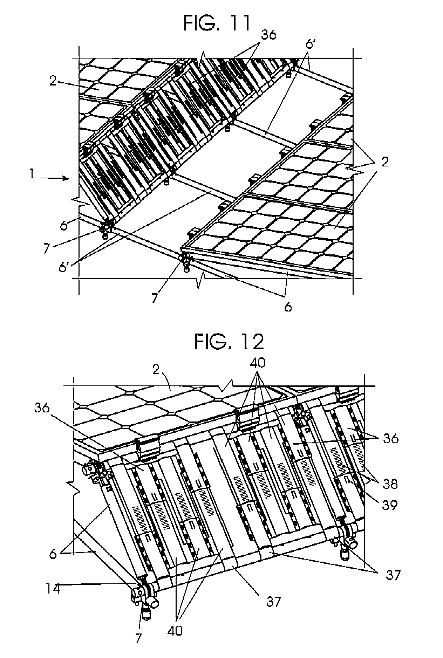

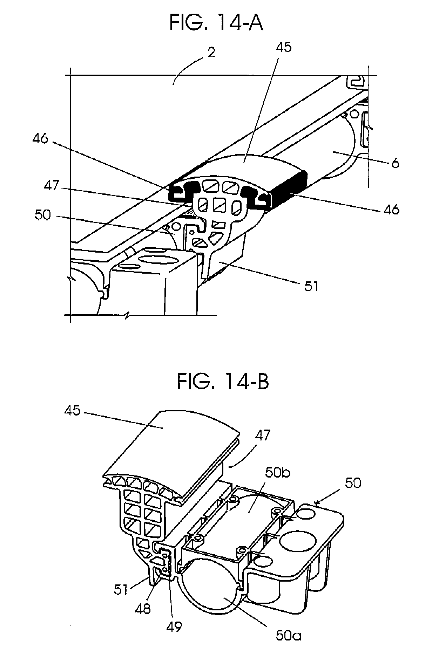

To complete the present description, and for the purpose of making the characteristics of the invention easier to understand, a set of drawings is attached to this descriptive brief, forming an inseparable part thereof. These drawings are provided for illustrative purposes, and are by no means limited. They show the following:
Figure number 1.- This figure shows a schematic perspective view of an example of how to form the modular structure included in this invention, in which the main parts and elements comprising it can be seen, as well as the configuration and layout of those parts and elements.
Figures numbers 2 and 3.- These figures show the same perspective views (enlarged and in detail) of the respective front and back views of one of the structure joining points, showing the way in which the joint is formed and the manner in which each of the parts that form the modular elements of that structure are coupled to each other. Figure 3 does not show the tips that join the different parts, so that the holes made in the tubes for them to be inserted can be seen. These are shown installed in the correct place in figure 2.
Figures numbers 4 and 5.- These figures show the front and lateral elevation views, respectively, of an example of how to form the part referred to as the coupling through which the ends of the tubes are connected.
Figures numbers 6 and 7.- These figures show the front and lateral elevation views, respectively, of an example of how to form the part referred to as the connecting rod, with a variable positioning angle that allows the required angle to be obtained in each case for obtaining the desired inclination of the structure.
Figure number 8.- This figure shows a perspective view of how to form the part referred to as anchoring claw, which is used to anchor the panels to the structure.
Figure number 9.- This figure shows a perspective view of how to form the part referred to as tip, through which the fastening between the other parts is assured, to make the structure robust and resistant.
Figure number 10.- This figure shows a perspective and detailed view of an example of how to form the claw part, which has a built-in visor for protecting against solar radiation.
Figure number 11.- This figure shows a detail of the structure, in which the joining tubes that form the module joining system can be seen, and an example of how to form the deflectors comprising the deflector system, both of which help to reduce the wind loads.
Figure number 12.- This figure shows an enlarged perspective view of the deflectors shown in figure 11.
Figure number 13-A.- This figure shows a perspective view of an example of how to form the part with the ratchet mechanism that comprises the season inclination system.

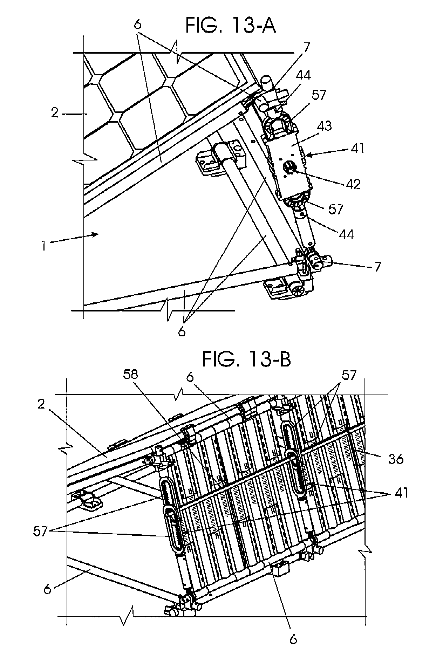

Figure 13-B.- This figure shows another perspective view of the structure with the ratchet mechanism comprising the seasonal inclination system, in this case, shown without the cover, so that the configuration of the gear wheels in that mechanism can be seen.
Figure number 14-A.- This figure shows a detailed view of an example of how to form one of the staple parts that comprise the alternative system for fastening the solar panels to the structure.
Figure number 14-B.- This figure shows a perspective view of the staple and the base element to which it is coupled, which is anchored on the tube, as shown in figure 14-A. In this case, it is shown separately, with its configuration and the layout of the parts and elements of which it is formed in full view.
Figure number 15.- This figure shows a detail of one of the elements forming the regulating and levelling system for installing the structure on surfaces with inclinations or which are rough.
Figure number 16.- This figure shows a schematic perspective view of part of the structure suspended over the tensor cables that forms the floating fastening system. It illustrates how to form the support part to which the structure coupling is anchored in which, and also shows one of the anchoring points to which the ends of the cables are attached.

### PREFERRED IMPLEMENTATION OF THE INVENTION

Considering the figures described above, and based on the numbering, the figures contain examples of the preferred method for implementing the invention, which includes the parts and elements indicated and described below.

Consequently, as shown in those figures, the structure (1) in question, which, as indicated, can be used as a support for solar panels (2), is configured based on a series of parts made of thermoplastic material which are coupled together by pressure clipping, to form modular elements (3) that are suitable for anchoring (also by pressure clipping) each of the solar panels (2), with the only screw fastening applied being that of attaching the structure (1) to the roof or to the place where it is to be installed.

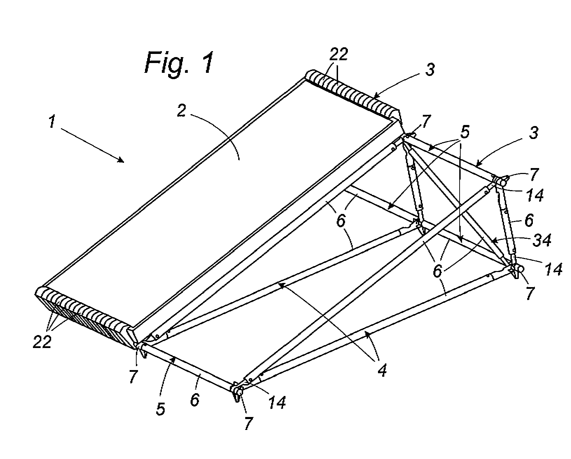

Those modular elements (3) will preferably be in the shape of a prism with a triangular base laid on its side, without this posing any limitations. The top side, as shown in figure 1, is the one on which the solar panels will be laid (2). That prism is formed by triangular trusses (4) laid out vertically and joined together by horizontal cross pieces (5). In this way, depending on the number of panels (2) to be installed, fewer or more modular elements (3) will be installed, i.e. triangular trusses (4) joined by horizontal cross pieces (5).

In turn, the thermoplastic parts used to form those modular elements (3) and form the structure (1) consist of a series of hollow tubes (6), couplings (7), rods (14), claws (22) and tips (12). The specific characteristics of these are given below.

The hollow tubes (6) are straight and have varying lengths, depending on the size of the panels (2) and the configuration of the structure (1), and the inclination to be used for installing those panels (2).

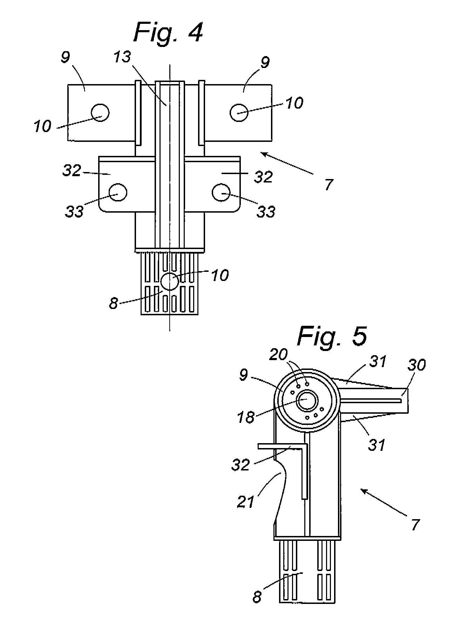

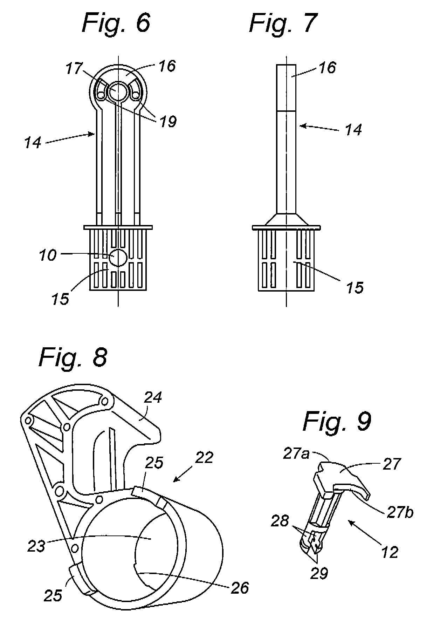

The couplings (7) are used for joining the ends of the tubes (6) together. As can be seen in figures 2 to 5, these parts have a more or less T-shaped configuration, and are used to make the joint at the lower end and at the ends of the lateral branches, with the respective cylindrical terminations (8) which are (9) suitable and designed to fit snugly inside the tubes (6). They also have a set of pre-drilled holes, marked with the reference (10), which will be laid out to coincide with a second set of holes, marked with the reference (11), at the ends of the tubes (6), for interlocking the tips (12) shown in figure 9 (whose shape and configuration will be described later), which secure and fix the joint between both elements.

The coupling parts (7) have a groove (13) in their central part that runs between the cylindrical terminations of the lateral ends (9) to the top part, which is designed to house a connecting rod (14) that allows for connection to be made to a coupling (7) of another tube (6), with the possibility of changing the angle at which it is joined to it.

To achieve this, the rod (14), as can be seen in figures 6 and 7, is comprised of a long body with a bottom cylindrical end (15) that is suitable and designed for snugly fitting inside a tube (6). This is done by inserting a tip (12) through the planned holes (10) and (11), respectively, in that cylindrical end (15) of the rod (14) and at the end of the tube (6).

At its opposite end, the connecting rod (14) has a circular area (16) with a central hole (17), which can be inserted into the groove mentioned previously (13) in the coupling part (7).

To join both elements, that coupling (7) has a third set of holes (18) in the internal part of its hollow lateral cylindrical terminations (9), into which a tip is inserted (12), interlocking the connecting rod (14) between them through that circular area (16) and passing through its central opening (17).

Furthermore, to enable the inclination between those elements to be adjusted, the coupling (7) and the connecting rod (14), which will consequently determine the inclination of the angle between the tubes (6), will have nipples (19) in the circular area (16) of the connecting rod (14) which are designed to be inserting into any of the fourth set of holes (20) made for that purpose inside the groove (13) around the third set of holes (18) in the cylindrical terminations (9) of the coupling (7).

In this way, the connecting rod (14) allows the tube (6) to be positioned at the angle required, based on the point of intersection of the structure to which it belongs (90°, 60°, 30°, etc.). It should be said that the coupling (7) optionally has a socket (21) which is useful in that it allows that angle to be reduced to 15° without the coupling body (7) preventing that inclination of the tube (6). That socket can be clearly seen in figure 3.

Continuing with the invention, to fasten the panels (2) to the horizontal cross pieces (5), a series of claws (22) will be installed, which, as can be seen in figure 8, have a configuration in which one of their ends has a circular opening (23), which can be inserted into the tubes (6) resting on the horizontal cross pieces (5), and the other end is in the form of a claw (24) into which the side of the panel (2) to be installed will fit. It should be mentioned that the size of those claw parts (22), and in particular, the distance between the circular hole (23) and the end in the form of a claw (24) will depend on the thickness of the solar panels to be installed, since they must be properly fitted between those sections of the part. On the other hand, the number of claws (22) inserted into each horizontal cross piece (5) may vary from only two or three claws at the top and the same number at the bottom, or completely occupy the whole length, as is shown in the example in figure 1.

It should also be mentioned that the claws (22) have ridges (25) on the edges of the circular opening (23) at one of their ends and a series of openings (26) that coincide at the opposite end, to allow the adjacent claws (22) to be fitted together using a tongue and groove system.

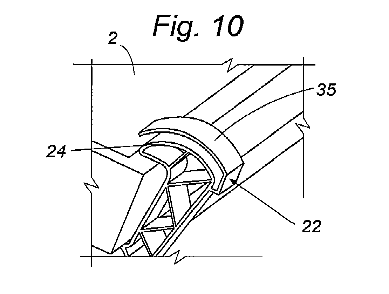

On the other hand, as an option, those claws (22) have a cowl or visor (35) arranged as shown in figure 10, on the upper part of the claw area (24) which secures the panels (2) and is therefore the part of it that is most exposed to the sunlight, allowing that visor (35) to be added to protect it from that radiation and lengthen the useful life of it, since it is made of thermoplastic material, like the rest of the structure.

The invention also comprises a series of interlocking parts or tips (12), which guarantee the anchoring and firmness of each joint between all the parts described herein that form the structure (1). As shown in figure 9, those tips (12) are comprised of a long body with a head (27) which has a protuberance (27a) and a depression (27b), arranged at opposite sides that interlock with the ridges (25) and openings (26) made in the claws (22), thereby preventing the lateral displacement of those claws (22) as can be seen in figure 2.

The lower part of the tip (12) has two attachments (28), each of which ends in a protuberance (29). That layout allows for a certain amount of flexibility in that end to allow it to penetrate under pressure the different openings of the parts to be secured. The protuberances (29) serve to prevent them from being dislodged.

It should be said that to allow the structure (1) to be secured and/or interlocked to a support foreseen for that purpose on the roof or site in which it is installed, the coupling (7) will have a tubular extension (30) in the part opposite the groove (13), duly fitted with stays (31) to reinforce it, and the respective angular wings (32) fitted with a fifth set of holes (33) for inserting anchor bolts.

In addition, to complete the robustness and unalterable nature of the structure shape, the invention includes the possibility of incorporating an auxiliary tube (6) which acts like a brace (34) and joins the diametrically opposed vertexes of the rear part of the structure (1). In this case, the fastening is done by screwing the connecting rods (14), coupled to the ends of that tube (6), to the angular wings (32) of the couplings (7) forming those vertexes. That layout is shown in figure 1.

Figure 11 shows, as an option, the aforementioned structure (1) with a joining system between the modules, to connect them together and increase the resistance to wind loads. It consists of incorporating a series of additional tubes (6') that connect the couplings (7) located at the base of each of the modular elements (3) forming the structure (1) in such a way that they convert it into an undividable whole, thereby increasing its resistance and allowing for the removal of the counter weights usually installed in this type of structure for offsetting the wind loads.

Likewise, as a complement or an alternative to the module joining system described above, a deflector system can be incorporated which has the same purpose, that of reducing the wind loads and avoiding the use of counter weights, but with greater efficacy, making it possible to install the solar panels on roofs or structures that support less weight. This can be applied individually in each modular element (3), and is consequently applicable to simpler structures with just one module. This system comprises the incorporation of a series of deflectors (36) on the inclined or vertical plane forming the slope of the modular element (3) opposite the one that incorporates the panels (2).

As shown in figure 12, these deflectors consist of parts that are more or less rectangular and flat which are clipped to the tubes (6) at the top and bottom of the module by extended parts (37) with C-shaped curved ends, covering the space between them to prevent the wind from penetrating inside that space, beneath the structure (1).

The height of these parts can be regulated, allowing them to be used in any configuration presented by the structure (1). For this purpose they are formed by at least two separate telescopically extensible parts, graduated by a grooved section (38) which have a series of tongues (39) installed in them, for that purpose.

In addition, for the purpose of increasing their resistance, the deflectors (36) have a configuration formed by channels (40) which reinforce them so that they are better able to support the wind loads. Logically, in each case the most appropriate number of deflectors for covering that space between the tubes (6) at the top and bottom of the structure (1) will be incorporated.

Continuing with the invention, the foregoing structure also has a seasonal inclination system, to allow the inclination of the panels (2) to be changed with respect to the plane on which the structure (1) is installed after it has been mounted and once those panels (2) have been attached to it, to correctly direct them at the different angle of incidence of the sun in the summer or winter.

That system is comprised of a ratchet mechanism (41) which, when activated manually by inserting the respective crank into the housing (42) made for that purpose, or when activated automatically through coupling a transmission axle (not shown) in that housing (42), increases or reduces the distance that separates the tubes (6) at the top and bottom of the rear slope of the module elements (3) of the structure, i.e., the slope opposite the one with the panels (2). In this way, that increase or reduction changes the inclination of the panels (2) as is required.

In the example of the preferred implementation (without limitation) shown in figures13-A and 13-B, that ratchet mechanism (41) is formed by a casing (43) in which the duly protected two gear assemblies (57) that comprise it are housed. Their ends have coupling devices (44) that can be inserted into the tubes (63) of the structure, in such a way that when the mechanism is activated, those ends are extended, increasing the distance between the tubes (3) at the top and bottom of the structure (1).

As shown in figure 13-B, the mechanism described above is incorporated at different points of the structure, and each of the ratchet mechanisms (41) is connected by an axle (58) that moves them simultaneously, when a crank or motor is coupled to it in the housing (42).

On the other hand, the invention includes an alternative system for fastening the panels (2) to the structure (1) comprised of a series of staples (45) which are connected by clipping to a base element (50) with a lateral displacement into which is inserted the respective tube (6) of the plane to which the panels (2) are fastened.

In addition to facilitating the mounting and dismounting of the panels (2) once the structure (1) has been mounted, these staples (45) are designed to be fitted to and secure panels of a conventional thickness and also thin glass panels, such as the one shown in the figures. In the latter case, since those panels are, as already mentioned, made of glass, rubber padding (46) will be incorporated into the part of the staple that fits onto the panel, to prevent grazes or breakages.

As can be seen in figure 14-A and in greater detail in figure 14-B, those staples (45) are comprised of parts that, apart from determining the respective incisions (47) for inserting the panels (2), have cowls on their tops, to protect them from the sun and a coupling system at the bottom for fastening them to the structure which allows them to be moved sideways. That system consists of a swelling (48) at the lower lateral part that, in the form of a guide, fits into a slot (49) made for that purpose in the base element (20) coupled to the tube (6) of the structure.

In turn, that base element (50) may be formed by a monoblock element with a central hole for inserting the tube (3) or, alternatively, as can be seen in the example in figure 14-B, it may consist of two bottom (50a) and upper (50b) parts respectively that are fastened to the tube (3) of the structure. In this case, it has the advantage that the installation can be made once the structure is assembled, since otherwise, it must be inserted through the end of the tube before being assembled.

With respect to this system for fastening the panels (2), it should be mentioned that to put the staples (45) of the base element (50) in position and in particular, remove them, i.e., remove the swelling (48) on the staple (45) inside the slot (49) of the base element (50), there is a lower wing (51) running lengthwise through the bottom part of the staple (45), that acts like a lever in performing that removing operation.

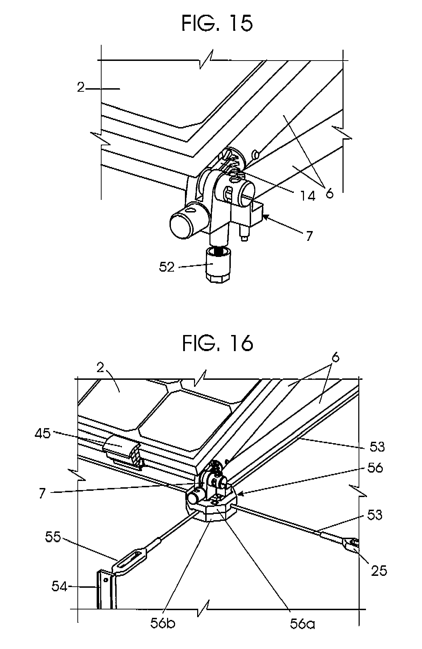

The structure (1) also has an adjusting and levelling system for fastening it to surfaces that are inclined or irregular. That system, as shown in figure 15, consists of a metal anchoring insert (52) which is screwed to the lower part of the lower couplings (7) on the different modules elements (3) through which each structure (1) support point is more or less raised separately.

Furthermore, and as an option, the structure includes a floating fastening system for the purpose of avoiding having to drill holes in roofs or façades, through which the structure (1) is suspended over them using cables (53) secured with anchors (54) installed around the perimeter of the roof or façade and/or at strategic points on the roof or façade.

Figure 16 shows those cables (53) anchored at their ends to the anchors (54) by tensors (55) with the structure (1) resting on them, secured by the lower couplings (7) of the structure to a series of support elements (56) located at the intersections of the cables (53).

For this purpose, these support elements (56) are formed by two parts joined together, one at the top (56a) on the surfaces of which are a series of cavities for connecting the couplings and one at the bottom (56b), with both being joined together by screwing or clipping, with the appropriate grooves for positioning those cables(53) between them.

It should also be said that the support elements (56) of this floating fastening system have at their base (56b) a *silentblock* element to prevent grazing or noise caused by vibrations of the structure due to the wind loads.

Having described in sufficient detail the nature of this invention and the way it is put into practice, it is not considered necessary to go into any further lengths to explain it for an expert on the subject to understand its scope and the benefits it brings. It is recorded that within its essential scope, it may be put used based on other methods of implementation that differ in detail from what is indicated by way of example, which will also achieve the protection that is also requested, providing that its fundamental principle is not altered, changed or modified in any way.

## Claims

1. A MODULAR SUPPORT STRUCTURE FOR SOLAR PANELS, which can be used as a support for fastening thermal and photovoltaic solar panels, **characterised by** the fact that it is configured based on a set of thermoplastic parts, that are coupled together by pressure clipping, forming modular elements (3) designed for fastening the solar panels (2), also by pressure clipping; in which the modular elements (3) preferably have the shape of a prism with a triangular base, lying on its side, with the top side being the one on which the panels will be placed (2). That prism is formed by triangular trusses (4) laid out vertically and joined together by horizontal cross pieces (5); in which the thermoplastic parts used to form the modular elements (3) which form the structure (1) consist of a series of hollow tubes (6), which are straight and of varying sizes, depending on the size of the panels and the inclination that is to be given to them; of couplings (7), used to join the ends of those tubes together, of connecting rods (14) with a variable positioning angle, that allow the tubes to be joined with the angle opening required in each particular case, of a set of anchoring claws (22) which are inserted into the cross pieces (5) and serve to hold the panels in place and of a series of tips (12) or interlocking parts, through which each joint between those parts that form the structure is anchored and fixed (1); in which, in addition, there is a joining system between the modules to connect them together, with a deflector system for reducing the wind loads, with a seasonal inclination system for allowing the inclination of the panels (2) to be changed with respect to the plane on which the structure (1) is installed once mounted, with those panels (2) fastened to it, and with a regulating and levelling system for fastening the structure to irregular surfaces.

2. A MODULAR SUPPORT STRUCTURE FOR SOLAR PANELS, in accordance with claim 1, **characterised by** the fact that the couplings (7) have a more or less T-shaped configuration, and cylindrical terminations (8) and (9) at their lower ends and the ends of their lateral branches, designed for being inserted snugly into the tubes (6). In addition, they have a first set of holes (10) laid out so that they coincide with a second set of holes (11) made at the ends of the tubes (6), for interlocking the tips (12). The couplings (7) have a groove (13) in their central part (13) which runs between the cylindrical terminations of the lateral ends to the upper part, which is designed to house a connecting rod (14) that allows the coupling (7) to be connected to another tube (6) and the angle at which it is fastened to it to be changed.

3. A MODULAR SUPPORT STRUCTURE FOR SOLAR PANELS, based on claims 1 and 2, **characterised by** the fact that the connecting rod (14) consists of a long body with a bottom cylindrical end (15) that is suitable and designed for snugly fitting inside a tube (6). This is done by inserting a tip (12) through the planned holes (10) and (11), respectively, in that cylindrical end (15) and at the end of the tube (6). The opposite end has a circular area (16) fitted with a central hole (17) that is inserted into the groove (13) described above on the coupling (7).

4. A MODULAR SUPPORT STRUCTURE FOR SOLAR PANELS, based on claims 1 to 3, **characterised by** the fact that for the purpose of making the fastening between the coupling (7) and the connecting rod (14) at different positioning angles, the internal part of the later cylindrical terminations (9) of the coupling (7), which are hollow, have a third set of holes (18) into which a tip (12) is inserted, interlocking that rod (14) between them through the above-referred circular area (16). This circular area of the rod (14) has nipples (16) that are designed for fitting into any one of a fourth set of holes (20) arranged in a circle inside the groove (13), surrounding those third holes (18) of the cylindrical terminations (9) of the coupling (7).

5. A MODULAR SUPPORT STRUCTURE FOR SOLAR PANELS, based on claims 1 to 4, **characterised by** the fact that the coupling (7) has, as an option, a socket (21) which allows the rod (14) positioning angle to be reduced to 15° without the coupling body (7) preventing that inclination of the tube (6) connected to the rod (14).

6. A MODULAR SUPPORT STRUCTURE FOR SOLAR PANELS, based on claim 1, **characterised by** the fact that the claws (22) have a configuration in which, at one end there is a circular opening (23) designed for being inserted into the tubes (6) that support the horizontal cross pieces (5), with the opposite end in the shape of a claw (24) into which the side of the panel (2) to be installed fits. The dimensions of those claw parts (22), and in particular, the distance between the circular opening (23) and the claw-shaped end (24) is appropriate for the thickness of the panels to be installed and the claws (22) have ridges (25) on the edges of the circular opening (23) at one of their ends and a series of openings (26) that coincide at the opposite end, to allow the adjacent claws (22) to be fitted together using a tongue and groove system.

7. A MODULAR SUPPORT STRUCTURE FOR SOLAR PANELS, based on claim 6, **characterised by** the fact that optionally, the claws (22) may have a cowl or visor (35) arranged on the top part of the claw area (24) which supports the panels (2) which is the part that is most exposed to the sun, for protecting the part from that radiation and lengthening its useful life.

8. A MODULAR SUPPORT STRUCTURE FOR SOLAR PANELS, based on claims 1 to 7, **characterised by** the fact that the tips (12) are comprised of a long body with a head (27) that has a protuberance (27a) and a depression (27b), arranged at opposite sides that interlock with the ridges (25) and openings (26) made in the claws, and by the fact that at the lower end, the tip (12) is divided into two (28) attachments, each of which is crowned by a protuberance (29).

9. A MODULAR SUPPORT STRUCTURE FOR SOLAR PANELS, based on claim 1, **characterised by** the fact that the modular elements (3) forming the structure (1) which are formed by the clipped joining of the thermoplastic parts, are in the shape of a rectangular truss that is directly fastened to the roof or site in question.

10. A MODULAR SUPPORT STRUCTURE FOR SOLAR PANELS, based on claim 1, **characterised by** the fact that the modular elements (3) forming the structure (1) which are formed by the clipped joining of the thermoplastic parts, have a the shape of a rectangular or a cube-shaped prism or any other shape, depending on the needs of each particular case.

11. A MODULAR SUPPORT STRUCTURE FOR SOLAR PANELS, based on claim 1, **characterised by** the fact that to allow the structure (1) to be fastened or locked on the support foreseen for that purpose on the roof or site where it is to be installed, the coupling (7), on the part that is opposite the groove (13), has a tubular extended part (30), fitted with stays (31) to reinforce it, and the respective angular wings (32) fitted with a fifth set of holes (33) for inserting anchor bolts.

12. A MODULAR SUPPORT STRUCTURE FOR SOLAR PANELS, based on claims 1 to 11, **characterised by** the fact that in addition, and as a complement to increase the robustness and inalterable nature of the structure shape, the possibility has been considered of incorporating an auxiliary tube (6) in the form of a brace (34), to join the diametrically opposed vertexes of the rear side of the structure (1); and because its fastening is done by screwing the connecting rods (14), coupled to the ends of that tube (6), to the angular wings (32) of the couplings (7) forming those vertexes.

13. A MODULAR SUPPORT STRUCTURE FOR SOLAR PANELS, based on claim 1, **characterised by** the fact that the system for joining the modules consists of incorporating additional tubes (6'), that connect the couplings (7) located at the bottom part of each modules forming the structure (1) so that it forms an undividable whole.

14. A MODULAR SUPPORT STRUCTURE FOR SOLAR PANELS, based on claim 1, **characterised by** the fact that the deflector system, which is complementary or an alternative to the joining system, since it can be applied individually to each module, includes the incorporation, on the inclined or vertical plane forming the slope of the module opposite the one with the panels (2), of a set of deflectors (36) formed by more or less rectangular, flat parts configured by channels (40) that increase their resistance, which when fastened by clipping to the tubes (6) at the bottom and top of the modular element (3) through extensions (37) with curved C-shaped ends, cover the whole space between them.

15. A MODULAR SUPPORT STRUCTURE FOR SOLAR PANELS, based on claim 14, **characterised by** the fact that the parts forming the deflectors (36) have adjustable heights, and are formed by at least two telescopic extensible parts which can be graduated by a slot (38) into which a series of tongues(39) placed on them for that purpose, fit.

16. A MODULAR SUPPORT STRUCTURE FOR SOLAR PANELS, based on claim 1, **characterised by** the fact that the seasonal inclination system consists of a ratchet mechanism (41) which increases or reduces the distance separating the top and bottom tubes (6) of the slope opposite the one on which the panels (2) are placed, which is activated manually through inserting a crank into a housing (42) inside it, for that purpose, or automatically through coupling a transmitter axle in that housing (42). That ratchet mechanisms will be incorporated into several points of the structure (1), joined by an axle (58) that moves them simultaneously.

17. A MODULAR SUPPORT STRUCTURE OF SOLAR PANELS, based on claim 16, **characterised by** the fact that the ratchet mechanism (11) is formed by a casing (43) in which the two gear elements (57) comprising it are housed, the ends of which have coupling elements (44) designed to be inserted into the tubes (6) of the structure.

18. A MODULAR SUPPORT STRUCTURE FOR SOLAR PANELS, based on claim 1, **characterised by** the fact that alternatively, it has a system for fastening the panels (2) to the structure comprised of staples (45) which are coupled by clipping to a base element (50) with a lateral displacement inserted inside the tube (6) on the plane on which the panels are fastened (2), designed for both conventional panels and thin glass panels.

19. A MODULAR SUPPORT STRUCTURE FOR SOLAR PANELS, based on claim 18, **characterised by** the fact that to fasten the thin glass panels, rubber padding (46) has been added in the staple part (45) that is fitted to the panel (2).

20. A MODULAR SUPPORT STRUCTURE FOR SOLAR PANELS, based on claim 18, **characterised by** the fact that the staples (45) forming the system for fastening the panels consist of a series of parts which, in addition to having sockets (47) for inserting the panels (2), have a cowl at the top of them to project the part from the sun and at the bottom they have a system for coupling them to the structure that allows it to be moved sideways, consisting of a swelling (48) at the bottom lateral part, which fits like a guide into a slot (49) made for that purpose in the base element (50) which is inserted into the tube (6) of the structure.

21. A MODULAR SUPPORT STRUCTURE FOR SOLAR PANELS, based on claim 20, **characterised by** the fact that the base element (50) is comprised of a mono block part with a central opening for inserting into the tube (6)

22. A MODULAR SUPPORT STRUCTURE FOR SOLAR PANELS, based on claim 20, **characterised by** the fact that the base element (50) is formed by two lower (50a) and upper (50b) parts which are fixed, respectively, to the tube (6) of the structure.

23. A MODULAR SUPPORT STRUCTURE FOR SOLAR PANELS, based on any of claims 18 to 22, **characterised by** the fact that to remove the staples (45) from the base element (50), there is a lower wing (51) running lengthwise along the bottom of it that allows it to be used like a lever for removing the stable.

24. A MODULAR SUPPORT STRUCTURE FOR SOLAR PANELS, based on claim 1, **characterised by** the fact that the regulating and levelling system for fastening the structure to irregular surfaces consists of a metal insert (52) fastened by screwing to the back of the lower couplings (7) of the different modular elements (3), which more or less lifts each support point of the structure separately.

25. A MODULAR SUPPORT STRUCTURE FOR SOLAR PANELS, based on claim 1, **characterised by** the fact that in addition, and as an option, it has a floating fastening system through which the structure (1) is suspended above the roof or façade on which it is to be installed by cables (53) fastened with anchoring elements (54) arranged around the roof or façade perimeter and/or at different strategic points on them.

26. A MODULAR SUPPORT STRUCTURE FOR SOLAR PANELS, based on claim 25, **characterised by** the fact that the ends of the cables (53) are anchored to the anchoring elements (54) by tensors (55) and the structure (1) is supported on them, fastened by its lower couplings (7) on a series of support points (56) located at the intersections of the cables (53).

27. A MODULAR SUPPORT STRUCTURE FOR SOLAR PANELS, based on claim 26, **characterised by** the fact that the support parts (56) are formed by two points joined together, a top one (56a) on the surface of which there are cavities for attaching the couplings and a lower one (56b). Both are joined together by screwing or clipping, and have the appropriate grooves for incorporating the cables between them (53)

28. A MODULAR SUPPORT STRUCTURE FOR SOLAR PANELS, based on claim 27, **characterised by** the fact that the support parts (56) have a *silentblock* part on their bases (56b).
